# EUROPEAN PATENT APPLICATION

(11) **EP 1 712 823 A1**
(43) Date of publication of application: **18.10.2006**
(21) Application number: 05425214.3
(22) Date of filing: 13.04.2005
(51) Int. Cl.: F16L 3/00, F16L 3/10, F16L 3/12, D06F 39/08

(54) **Device for fixing a flexible tube to an aquarium tank**

(71) Applicant: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(57) **Abstract**

Fixing device for fixing a flexible tube (12) to an aquarium tank, of the type comprising a support element (16) for the flexible tube (12) having substantially U-like curved shape and suitable to be engaged astride on an edge (14) of the tank. The support element comprises a first half-shell (18) and a second half-shell (20) juxtaposed to each other with formation of a housing seat (22) of predetermined section for housing the flexible tube (12).

## Description

### Field of application

The present invention relates to a device for fixing a flexible tube to an aquarium tank.

The device is of the type comprising a tube support element having substantially U-like curved shape, and suitable to be engaged astride on a tank edge.

### Prior art

In the aquaria field the need of connecting the aquarium tank to external accessories, such as filters, pumps, heaters is known.

To such purpose, an adduction tube and, respectively, an exhaust tube connect the tank to allow the water circulation from the tank towards the accessories and vice versa.

The tank of an aquarium is normally made of glass. For this reason it is desirable to avoid holes on the bottom or on the walls of the tank for making pass through the tubes.

To attain this aim, placing the tube astride of the tank mouth edge is preferred.

Normally, the tubes for aquaria are flexible to allow a manoeuvre ease and, to such purpose, they are made of a plastic soft material, such as soft PVC, or they have such a structure as to obtain a desired flexibility.

Taking into consideration such flexibility, it is necessary to ensure a steady positioning of the flexible tube on the tank mouth avoiding an undesired movement thereof, as well as a possible risk of the tube throttling.

To attain this aim, the use is diffused of a flexible tube support element having substantially U-like curved shape which is engaged astride on a tank mouth edge.

The known element substantially has the shape of a stiff piece of tube curved with a U-like shape.

This piece of tube rests on the upper edge of the tank and it is connected, by means of fittings, to the flexible tube. The fittings normally comprise devices for quick coupling with the flexible tube.

This known solution however exhibits the drawback of requiring the use of specific fittings for the flexible tube and for the stiff piece of tube, to the disadvantage of an increased number of pieces according to the dimensions of the tubes which are employed each time.

Moreover, the fittings require continuous controls of water seal with a cost burden and user's discomfort.

In another known solution, to avoid the use of fittings, the use is provided, in place of the flexible tube, of a single stiff tube for its whole length. The stiff tube is curved in correspondence with the point of fixing to the tank. The use of a rigid tube however exhibits the drawback of a limited maneuverability and it is also particularly uncomfortable to be used in environment of small dimensions.

The stiff tube also has a limited adaptability to tanks having edge of different thickness.

### Summary of the invention

Starting from the above cited drawback group, the technical problem underlying the present invention is that of making a device for fixing a flexible tube to an aquarium tank which allows, with a limited number of pieces, a firm positioning of flexible tubes having different diameters.

Such technical problem is solved according to the invention by a fixing device of the above mentioned type wherein the support element comprises a first half-shell and a second half-shell, which are juxtaposed to each other with formation of a seat of predetermined section for housing the flexible tube.

Further characteristics and advantages of the fixing device according to the invention will be apparent from the following description of an embodiment thereof given by way of indicative and non limiting example with reference to the annexed drawings.

### Brief description of the invention

Figure 1 shows a fixing device according to the invention under a disassembled condition in association with a flexible tube.
Figure 2 shows an enlarged scale first half-shell of the fixing device of figure 1.
Figure 3 shows a second enlarged scale half-shell of the fixing device of figure 1.

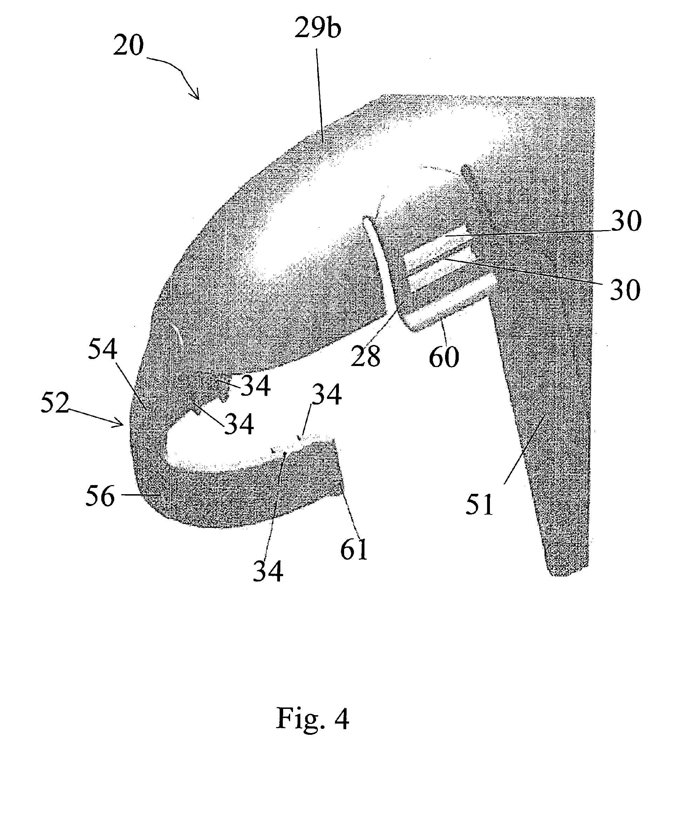

Figure 4 shows a further enlarged scale detail of the second half-shell of figure 3.
Figure 5 shows a view of the fixing device of figure 1 under an assembled condition and mounted astride of an edge for tank aquarium.

### Detailed description

With reference to the annexed drawings, reference number 10 generally indicates a fixing device according to the present invention for fixing a flexible tube 12 to a tank 15 of an aquarium.

In the case of the shown solution, it is a corrugated tube 12 in soft PP.

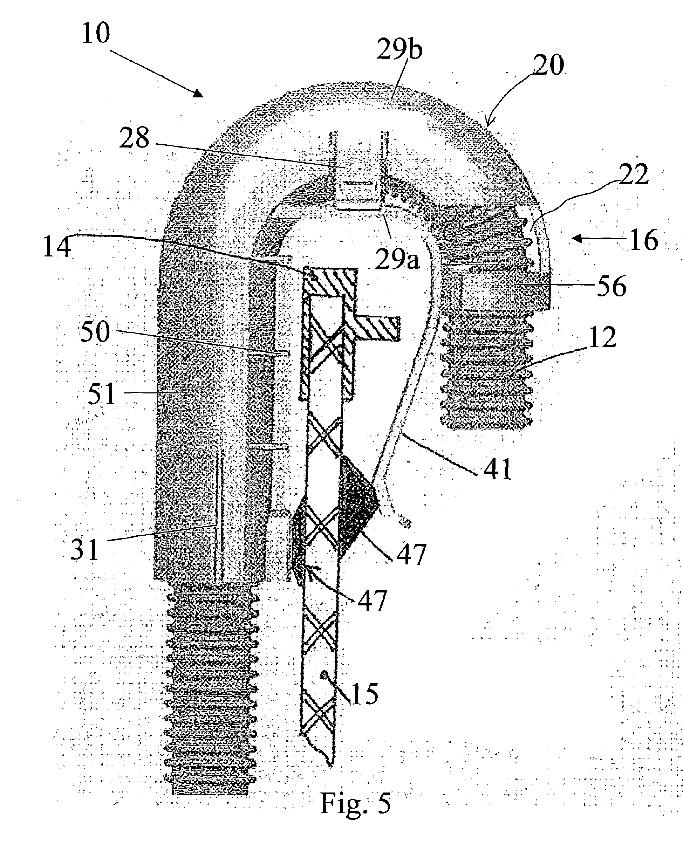

Figure 5 shows an upper edge 14 of an aquarium tank 15 mouth whereon the fixing device 10 according to the present invention is fixed.

The device 10 comprises a support element 16 of the flexible tube 12 of the type having a substantially U-like curved shape, and suitable to be engaged astride on the edge 14 of the tank mouth.

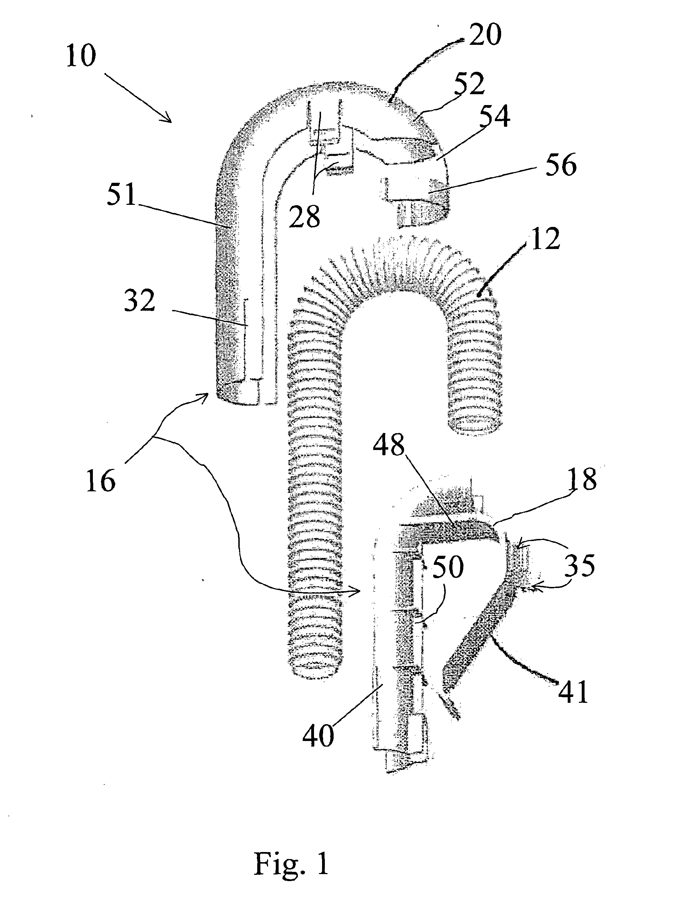

According to the invention, the support element 16 comprises a first half-shell 18 and a second half-shell 20 (figure 1) suitable to be juxtaposed to each other with formation of a housing seat 22 of sufficient predetermined section to house the flexible tube 12.

Preferably, each one of the two half-shell 18, and respectively 20, substantially has the shape of a half-tube piece so as to define a housing seat 22 having substantially tubular shape.

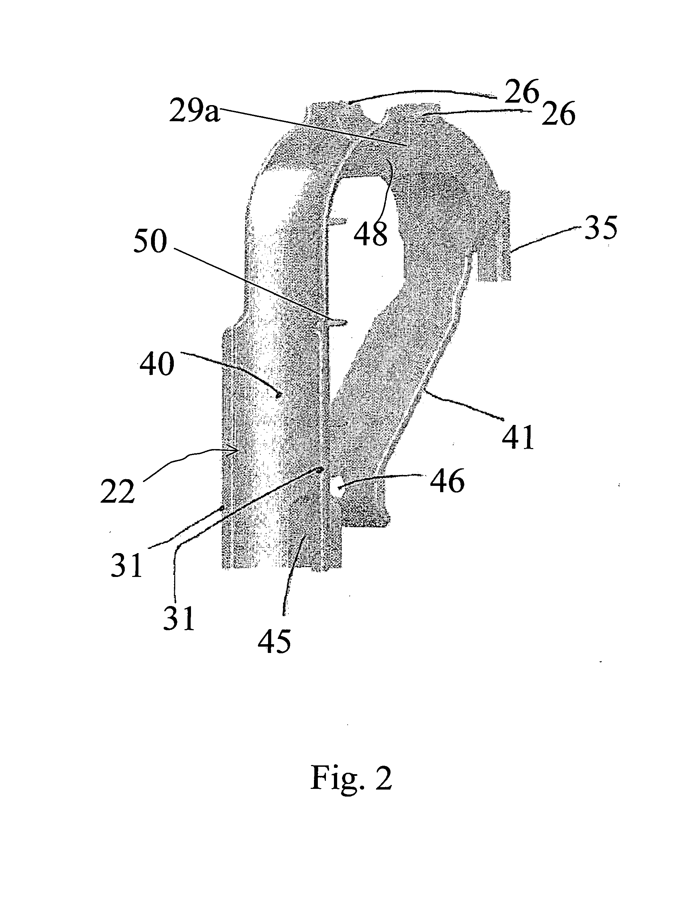

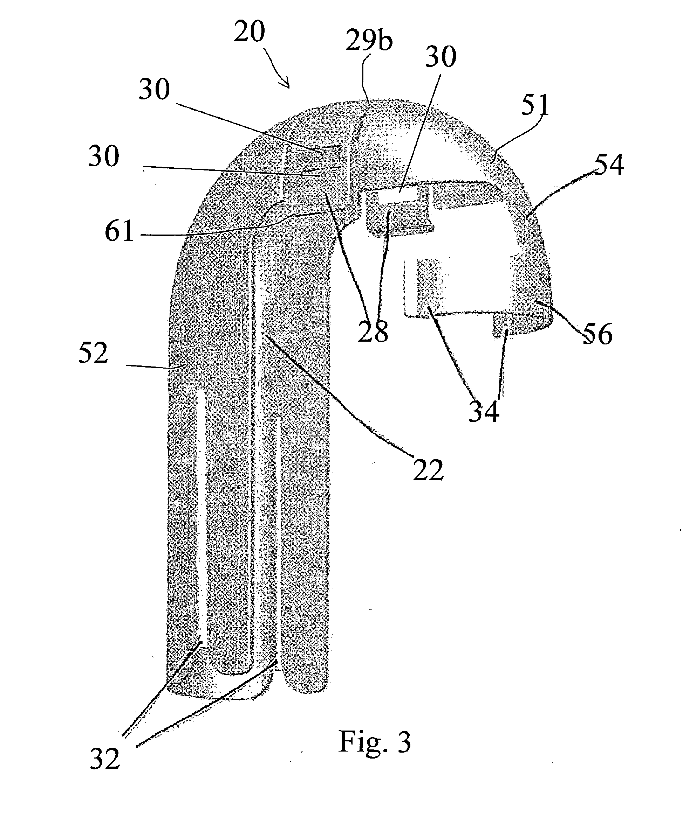

Preferably, the device 10 comprises means for regulating the juxtaposition of the first half-shell 18 with the second half-shell 20. In particular, the device 10 comprises a first pair of coupling teeth 26 (figure 2) opposed and parallel to each other and suitable to be engaged in respective notches 30 (figure 3).

Preferably, each tooth 26 is integrally made on a respective edge of the first half-shell 18 facing the second half-shell 20, and each notch 30 is made in a corresponding elastic tongue 28 integrally fixed on a respective edge of the second half-shell 20, facing the first half-shell 18.

Preferably, each elastic tongue 28 is provided with two or more notches 30 arranged at different heights (figure 3).

The insertion of each coupling tooth 26 in one of the notches 30 allows to regulate the mutual position between the two half-shells 18 and 20 and, in consequence, the section of the guide seat 22, so as to adapt the device 10 to flexible tubes having different diameter.

Preferably, in the shown solution the tongues 28 and the teeth 26 are made on a portion of curvature 29a, 29b respectively of the first half-shell 18 and of the second half-shell 20.

As it will be better described hereafter in the description, the elastic tongues 28 also serve as manoeuvre tongues for the disengagement of the coupling teeth 26 from the notches 30.

To ensure a further firm coupling of the two half-shells 18 and 20, the device 10 comprises further pairs of coupling teeth 34 opposed and parallel to each other, and corresponding tracks 35 provided with relative notches, also opposed and parallel to each other, for housing the coupling teeth 34.

Preferably, each one of the tracks 35 is made on a respective edge of the first half-shell 18 (figure 2), whereas each one of the coupling teeth 34 is made on a relative edge of the second half-shell 20 (figure 3).

Preferably, the tracks 35 and the coupling teeth 34 are made on a portion of the relative half-shells 18 and 20 intended to be placed inside the edge 14 of the tank (figure 5).

According to another characteristic of the invention, the device 10 comprises guide means to guide and facilitate the juxtaposition of the two half-shells 18 and 20.

These guide means comprise a pair of ribs 31 opposed and parallel to each other suitable to be inserted sliding in corresponding slits 32.

Preferably, each one of the ribs 31 is made on an edge of the first half-shell 18 (figure 2), and each slit 32 is made on a respective edge of the second half-shell 20 (figure 3).

Preferably, the ribs 31 and the grooves 32 are made on a portion of the relative half-shells 18 and 20 intended to be placed outside the edge 14 of the tank (figure 5).

As it is possible to note from figure 1, with reference to the U-like curvature of the support element 16, the first half-shell 18 serves as intrados half-shell suitable to be mounted directly on the edge 14 of the tank 15 mouth, whereas the second half-shell 20 serves as extrados half-shell placed above the first half-shell 18 to form a sort of protection cover of the flexible tube 12.

In conformity with this different function, the first half-shell 18 and the second half-shell 20 exhibit structural characteristics different from each other.

In particular, the intrados half-shell 18 comprises a first branch 40, intended to be placed outside the edge 14 of the tank and a second branch 41 intended to be placed inside the edge 14 of the tank. The second branch 41 is made in such a way as to have a greater elasticity than the first branch 40. Preferably, the first branch 40 is made of stiff plastic material, whereas the second branch 41 is made of plastic material having a remarkably greater elasticity than the first branch 40.

The elasticity of the second branch 41 allows to adapt the curvature radius of the intrados half-shell 18 at the edges 14 of tanks for aquaria having different thickness.

Close to the opposite ends of the branch 40 and of the branch 41, the half-shell 18 comprises a pair of seats 45, and respectively 46 (figure 2), for the insertion of a rubber bulb or of a suction cup 47 to allow a greater adherence on the tank edge 14.

Figure 5 shows a pair of opposite suction cups 47 inserted in the respective seats 45 and 46.

The first half-shell 18 also comprises the above-described curvature portion 29a, which connects the two branches 40 and 41.

It is to be noted that the portion of curvature 29a exhibits, on its concave side, a reinforcing pad 48 to avoid an excessive bending of the half-shell 18.

It is also to be noted that the first branch 40 exhibits ribs 50 for resting on the tank edge 14.

The second half-shell 20 exhibits a first branch 51 intended to be placed outside the tank edge 14 and a second branch 52 intended to be placed inside the tank edge 14.

The first branch 51 has a stiff structure whereas the second branch 52 is shaped in such a way as to exhibit a greater elasticity than the first branch 51.

In particular, to obtain the greatest elasticity, the second branch 52 is provided with an open ring 56 and with a brace-like portion 54, having reduced width with respect to the first branch 51, which connects the open ring 56 to the portion of curvature 29b.

On the open ring 56 the above coupling teeth 34 are made.

The up to now described mounting of the device 10 is carried out in the following way.

In a first moment, the first intrados half-shell 18 equipped with suction cups 47 is placed on the upper edge 14 of the tank 15. Thanks to the elasticity of the second branch 41 of the half-shell 18, the suction cups 47 are made adhere on the opposite sides of the tank edge 14.

Subsequently, the flexible tube 12 is housed in the housing seat 22 of the half-shell 18. Thanks to its flexibility, the tube 12 takes a correct curvature.

Subsequently, the second half-shell 20 is inserted in a guided way from above the tube 12 making the ribs 31 of the first half-shell 18 track in the respective slits 32.

The second half-shell 20 is pushed downwards until coupling teeth 26 are made release in the notches 30 made in the elastic tongues 28.

In so doing the desired juxtaposition of the two half-shells 18 and 20 is executed with formation of a housing seat 22 of determined section within which the flexible tube 12 is retained in position.

As above mentioned, the elastic tongues 28 are provided with one or more notches 30 arranged at different heights. The insertion into one or the other of the notches 30 allows to obtain a housing seat 22 of desired section adapted to the diameter of the flexible tube 12 used.

Subsequently, one acts on the portion with open ring 56 of the second half-shell 18 to make the coupling teeth 34 release in the relative notches of the tracks 35.

Thanks to the above elasticity of the brace 54 of the second half-shell 20 it is possible to adapt the curvature of the second half-shell 20 to the curvature of the flexible tube 12 without the risk of cracks or breaks of the half-shell.

It is to be also noted that on each side of the open ring 56 at least two or more coupling teeth 34 are made. This allows also in this case to regulate the mutual position of the two half-shells 18 and 20 and to obtain a correct adaptation of the housing seat 22 to the diameter of the flexible tube 12.

From the description reported up to now, it can be deduced that the coupling teeth 26 and 34, the elastic tongues 28 and the tracks 35 serve both as juxtaposition elements and as elements to regulate the mutual position of the two half-shells 18 and 20 and to obtain the desired section of the seat 22.

To disassemble the flexible tube 12, one can proceed in the inverted way with respect to what has been described up to now.

In a first moment, the elastic tongues 28 are disengaged from the relative ties and thus the half-shell 20 can be taken off upwards with respect to the lower half-shell 18. In particular, the teeth 34 slide in the tracks 35 and the ribs 31 slide in the slits 32.

To facilitate the disengagement of the elastic tongues, the ends of the elastic tongues are provided with edges 61 curved outwards. By widening the edges 61 it is possible to obtain the desired disengagement.

The main advantage of the present invention is the possibility of fixing in a firm way a flexible tube of any diameter to the edge of a tank for aquarium. In particular, thanks to the presence of two half-shells it is possible to vary, according to the needs, the volume of the housing seat of the flexible tube.

Thus, it is not necessary to use fittings, which can cause drippings.

A further advantage of the present invention, thanks to the above intrados half-shell elasticity, is the possibility of adapting the device to the tank edges having different shapes and dimensions from each other.

In this regard, it is to be noted that, thanks to the elasticity of the second extrados half-shell branch, it is possible to vary the curvature of the flexible tube by adapting it to that of the intrados tube, without the risk of making the flexible tube collapse.

With reference to the elasticity of the second intrados half-shell branch 41, a further advantage is the possibility of maintaining the flexible tube in the correct position thanks to the presence of the suction cups or bulbs being constantly pressed on the tank mouth edge by the elastic reaction of the elastic branch 41.

A further advantage is the device installation and disassembly ease thanks to the presence of coupling elements of intuitive use, such as the ribs and the relative slits or the coupling teeth and the relative notches.

Obviously, a technician of the field will bring several changes and modifications to the above described fixing device, with the aim of meeting contingent and specific needs, the changes being however all within the scope of protection of the invention as defined in the following claims.

## Claims

1. Fixing device for fixing a flexible tube (12) to an aquarium tank, of the type comprising a support element (16) for the tube (12) having substantially U-like curved shape and suitable to be engaged astride on an edge (14) of the tank, **characterised in that** the support element (16) comprises a first half-shell (18) and a second half-shell (20) juxtaposed to each other with formation of a housing seat (22) of predetermined section for housing the flexible tube (12).

2. Device according to claim 1, **characterised in that** each one of the two half-shells (18, 20) substantially has the shape of a half-tube piece so as to define a substantially tubular housing seat (22).

3. Device according to claim 1 or 2, **characterised in that** it comprises regulation means for regulating the mutual juxtaposition of the two half-shells (18, 20) so as to vary the section of the housing seat (22).

4. Device according to claim 3, **characterised in that** said regulation means comprise at least on pair of coupling teeth (26, 34) opposed and parallel to each other and suitable to be engaged in respective notches (30, 25).

5. Device according to claim 4, **characterised in that** it comprises manoeuvre tongues (28) for the disengagement of the coupling teeth (26, 34) of the notches (30).

6. Device according to claim 4, **characterised in that** a first pair of teeth (26) is made on a respective edge of the first half-shell (18) facing the second half-shell (20) and a respective first pair of notches (30) is made on a respective edge of the second half-shell (20), facing the first half-shell (18).

7. Device according to claim 4, **characterised in that** a second pair of teeth (34) is made on a respective edge of the second half-shell (20) facing the first half-shell (18) and a respective second pair of notches (35) is made on a respective edge of the first half-shell (18), facing the second half-shell (20).

8. Device according to claim 6, **characterised in that** the first pair of teeth (26) and the first pair of respective notches (30) are made on a portion of curvature (29a, 29b) respectively of the first half-shell (18) and of the second half-shell (20).

9. Device according to claim 1, **characterised in that** it comprises guide means for guiding the juxtaposition of the first half-shell (18) and of the second half-shell (20).

10. Device according to claim 9, **characterised in that** said guide means comprise a pair of ribs (31) opposed and parallel to each other suitable to be inserted in corresponding slits (32).

11. Device according to claim 1, **characterised in that** the first half-shell (18) serves as intrados half-shell suitable to be mounted astride directly on the edge (14) of the tank, and that the second half-shell (20) serves as extrados half-shell placed above the first half-shell (18).

12. Device according to claim 11, **characterised in that** the first half-shell (18) comprises a first branch (40), intended to be placed outside the edge (14) of the tank and made in such a way as to have a determined stiffness, and a second branch (41) intended to be placed inside the edge (14) of the tank and made in such a way as to have a higher elasticity than the first branch (40).

13. Device according to claim 12, **characterised in that** close to the opposite ends of the first branch (40) and of the second branch (41), the first half-shell (18) comprises a pair of seats (45, 46) for the insertion of a rubber bulb or of a suction cup suitable to adhere to the edge (14) of the tank mouth.

14. Device according to claim 12, **characterised in that** the first half-shell (18) comprises a portion of curvature (29a) which connects the two branches (40, 41) and is provided with a reinforcing pad (48).

15. Device according to claim 11, **characterised in that** the second half-shell (20) exhibits a branch (51) intended to be placed outside the edge (14) of the tank mouth and a second branch (52) intended to be placed inside the edge (14) of the tank mouth and having elasticity different from the first branch (51).

16. Device according to claim 15, **characterised in that** the first branch (51) is made of stiff material and that the second branch (52) is provided with an open ring (56) which is connected to the first branch (51) by means of a brace-like portion (54).
